# EUROPÄISCHE PATENTANMELDUNG

(11) **EP 4 790 324 A1**
(43) Veröffentlichungstag der Anmeldung: **12.08.2026**
(21) Anmeldenummer: 26156707.7
(22) Anmeldetag: 05.02.2026
(51) Int. Cl.: F24D 19/10, F24H 15/104, F24H 15/148, G01K 17/06

(54) **VERFAHREN UND VORRICHTUNG ZUR ERMITTLUNG DER NIEDERTEMPERATURFÄHIGKEIT EINER GEBÄUDEHEIZUNGSANLAGE**

(30) Priorität: 06.02.2025 DE 102025104406
(71) Anmelder: Techem Energy Services GmbH, 65760 Eschborn (DE)
(72) Erfinder: Hallmen, Holger, 63457 Hanau (DE); Kähler, Dr. Arne, 61350 Bad Homburg (DE); Klein, Joachim, 65760 Eschborn (DE); Tritschler, Prof. Dr-Ing. Markus, 70839 Gerlingen (DE)
(74) Vertreter: Keil & Schaafhausen Patentanwälte PartGmbB

(57) **Zusammenfassung**

Die Erfindung betrifft ein Verfahren und eine zur Durchführung des Verfahrens eingerichtete Vorrichtung zur Ermittlung der Niedertemperaturfähigkeit einer Gebäudeheizungsanlage (2) eines Gebäudes (3) umfassend Folgendes: Ermitteln der Gesamt-Heizkörperleistung (*Q̇ᵢₙₛ, bᵢₙₛ*) von im Gebäude (3) installierten Heizkörpern (6) in einem Auslegungspunkt (A) der Gebäudeheizungsanlage (2); Ermitteln einer Außentemperatur (ϑ*_{A}*) in einem Heizabschnitt (Δ*T_{HA}*) an dem Gebäude (3); Ermitteln einer aktuellen Heizleistung (*Q̇_{LS}, b_{LS}*) der im Gebäude (3) installierten Heizkörper (6) in dem Heizabschnitt (*ΔT_{HA}*); Bestimmen einer Heizleistungsreserve (*r_{HA}*) für den Heizabschnitt (Δ*T_{HA}*) aus einem Vergleich der aktuellen Heizleistung (*Q̇_{LS}, b_{LS}*) in dem Heizabschnitt (*ΔT_{HA}*) und der Gesamt-Heizkörperleistung (*Q̇ᵢₙₛ, bᵢₙₛ*); Bestimmen der Heizleistungsreserve (*r_{HA}*) für mehrere Heizabschnitte (Δ*T_{HA}*) eines Betrachtungszeitraums (*ΔT_{B}*); Bestimmen einer Norm-Heizleistungsreserve ( ${r}_{LS}^{N}$) für das Gebäude (3) bei einer Normaußentemperatur ( ${ϑ}_{A}^{N}$) aus den Heizleistungsreserven (*r_{HA}*) für die mehreren Heizabschnitte (Δ*T_{HA}*) in dem Betrachtungszeitraum (Δ*T_{B}*); Bewerten der Norm-Heizleistungsreserve ( ${r}_{LS}^{N}$) mit einem Heizleistungsreserve-Grenzwert (*r_{G}*). (Fig. 1)

## Beschreibung

Die Erfindung betrifft ein Verfahren und eine Vorrichtung zur Ermittlung der Niedertemperaturfähigkeit (Wärmepumpeneignung) einer Gebäudeheizungsanlage. Der Begriff Wärmepumpeneignung steht hier stellvertretend für die Eignung der Gebäudeheizungsanlage zur Niedertemperaturfähigkeit. Die Begriffe Niedertemperaturfähigkeit und Wärmepumpeneignung werden synonym verwendet. Unter Niedertemperaturfähigkeit wird dabei die Fähigkeit der Gebäudeheizungsanlage verstanden, mit im Vergleich zu üblichen Systemtemperaturen (bspw. den Auslegungstemperaturen von 90° Vorlauftemperatur und 70° Rücklauftemperatur oder von 70° Vorlauftemperatur und 50° Rücklauftemperatur) niedrigen Systemtemperaturen (Vorlauf- und Rücklauftemperaturen) einen ausreichenden Beheizungszustand herzustellen.

Wärmepumpen und mit niedrigen Systemtemperaturen betriebene Nah- und Fernwärmesysteme erscheinen heute als geeignete Wärmeerzeugungssysteme, um die energetische Transformation der Heizungslagen des Gebäudebestandes von einer fossilen Wärmeerzeugung hin zu einer nicht-fossilen Wärmeerzeugung zu erreichen. Dies ist im Zuge einer erforderlichen globalen CO₂-Reduktion dringend geboten.

Für diese Transformation ist es wichtig zu wissen, ob und falls ja welche Veränderungen an der Gebäudehülle und/oder an der Gebäudeheizungsanlage erforderlich sind, um das heute weit verbreitete fossile Heizungssystem mit einem fossile Endenergie verbrennenden Heizkessel durch mit niedrigen Systemtemperaturen betriebene Wärmepumpen oder Nah- und Fernwärmesysteme zu ersetzen. Der Anteil am Mehrfamilienhausbestand mit Heizkesseln zur fossilen Wärmeerzeugung beträgt in Deutschland derzeit ca. 2/3 am Bestand. In Europa wird der Anteil ähnlich sein.

Fossile Heizungsanlagen sind auf vergleichsweise hohe Vorlauftemperaturen ausgelegt, d.h. klassische Heizkörper (Raumheizkörper) sind je nach Auslegungspunkt beispielsweise auf Vorlauftemperaturen von 90°C, Rücklauftemperaturen von 70°C (also einer mittleren Heizkörpertemperatur von etwa 80°C) und eine angestrebte Raumtemperatur von 20°C (Auslegungspunkt Q60 mit einer Übertemperatur zwischen mittlerer Heizkörpertemperatur und Raumtemperatur von 60°C) oder auf Vorlauftemperaturen von 70°C, Rücklauftemperaturen von 50°C (also einer mittleren Heizkörpertemperatur von etwa 60°C) und eine angestrebten Raumtemperatur von 20°C (Auslegungspunkt Q40 mit einer Übertemperatur zwischen mittlerer Heizkörpertemperatur und Raumtemperatur von 40°C) ausgelegt. Bei der Errichtung der Heizung werden die in den einzelnen Räumen vorgesehenen Heizkörper *i* mit ihrer jeweiligen Heizköperleistung *Q̇_{ins,i}* so ausgewählt, dass für jeden Raum die installierte Heizköperleistung *Q̇_{ins,i}* im Auslegungspunkt der Heizungsanlage ausreicht, um den Raum auch bei einer minimalen Außentemperatur (die Regionen-bedingt schwanken kann) mindestens auf eine gewünschte Raumtemperatur, bspw. von 20°C, zu erwärmen. Die minimale Außentemperatur wird auch als Normaußentemperatur bezeichnet. Bei dieser Normaußentemperatur wird also die installierte Gesamt-Heizkörperleistung *Q̇ᵢₙₛ* abgerufen, die sich der Summe der Heizkörperleistungen *Q̇_{ins,i}* aller in der Heizungsanlage respektive dem Gebäude installierten Heizkörper ergibt. Mit anderen Worten beschreibt die installierte Gesamt-Heizkörperleistung *Q̇ᵢₙₛ* die maximale Heizlast des Gebäudes im Auslegungspunkt der Gebäudeheizungsanlage bei Normaußentemperatur.

Üblicherweise erfolgt die Auslegung für die Normaußentemperatur nach DIN EN 12831. Es handelt sich dabei um die regional tiefste Temperatur, welche sich innerhalb von 20 Jahren mindestens 10-mal über einen Zeitraum von zwei aufeinanderfolgenden Tagen gehalten hat. Der Wert ist im nationalen Anhang NA der DIN EN 12831 für alle Orte mit mehr als 20000 Einwohnern tabelliert. Beispielsweise liegt dieser für Frankfurt am Main bei -10°C.

Mit Wärmepumpen, die in bestehenden Gebäudeheizungsanlagen die fossilen Heizkessel ersetzen, lassen sich die Auslegungs-Vorlauftemperaturen der Heizkörper in den vorstehend beschriebenen, typischen Auslegungspunkten nicht oder nicht energieeffizient erreichen. Teilweise sind die installierten Heizkörperleistungen im Auslegungspunkt aber so groß, bezogen auf den eigentlichen Auslegungspunkt also überdimensioniert, dass diese auch mit einer geringeren Vorlauftemperatur betrieben werden können und trotzdem genügend Heizleistung zur Verfügung zu stellen, um die Gebäude auf die gewünschte Raumtemperatur von bspw. 20°C zu erwärmen. Die Gebäudeheizungsanlange ließe sich ohne Komforteinbußen also mit niedrigeren Systemtemperaturen betreiben.

Ob die Gebäudeheizungsanlage mit den installierten Heizkörpern in der Lage ist, die gewünschten Raumtemperaturen auch bei Vorlauftemperaturen von 50°C bis 55°C zu erreichen, bei denen Wärmepumpen und insbesondere Luft-Wasser-Wärmepumpen noch energieeffizient betreibbar sind, ist in der Praxis allerdings schwierig abzuschätzen. Möglich ist, dies durch einen Energieberater abschätzen zu lassen, der die Wärmeleistung der installierten Heizkörper erfasst, den Wärmebedarf der Räume bzw. die Raumheizlast bestimmt und die dafür benötigten Vorlauftemperaturen der Heizungsanlage ermittelt. Daraus kann dann abgeschätzt werden, ob die Gebäudeheizungsanlage mit einer Wärmepumpe als Energieerzeuger betreibbar ist und welche Umrüstungen der Heizungsanlage und ggf. der Gebäudehülle notwendig sind. Ein derartiges Gutachten ist aufwendig und teuer, nur um ggf. festzustellen, dass die Heizflächen der existierenden Gebäudeheizungsanlage idealerweise bereits so ausgelegt sind, dass sie mit für Wärmepumpen typischen niedrigen Systemtemperaturen (Vorlauftemperatur von 50°C bis 55°C im Auslegungspunkt) betrieben werden können.

Die Effizienz von Wärmepumpen hängt in starken Maß von den Systemtemperaturen ab. Je größer die Differenz zwischen der Temperatur der Wärmequelle (z.B. der Umgebungsluft bei Luft-Wärmepumpen) und der Temperatur, bei der die Wärme bereitgestellt wird (also der Vorlauftemperatur), ist, desto niedriger ist der Augenblickswert der Effizienz, die sogenannte Leistungszahl (auch genannt COP: Coefficient of Performance). Der Jahreskennwert, die sogenannte Jahresarbeitszahl (JAZ), bestimmt sich als das Verhältnis der über ein Jahr bereitgestellten Wärmemenge zur dafür verbrauchten elektrischen Energie. Es findet also im Jahresverlauf eine Mittelung bzw. Integration über alle Betriebszeitpunkte des Betrachtungszeitraumes mit jeweils unterschiedlichen Temperaturen und resultierenden Leistungszahlen statt.

Da die Außentemperatur in einem beliebigen Jahreszeitraum stets einen ähnlichen und vergleichbaren Verlauf hat, kann man die Eignung bereits anhand der benötigten Systemtemperaturen beim Auslegungspunkt abschätzen. Wenn das Gebäude bei Normaußentemperatur mit einer Vorlauftemperatur von maximal etwa 55°C beheizt werden kann, ist die Effizienz einer Wärmepumpe in der Jahresbetrachtung gegeben.

Vor diesem Hintergrund besteht ein Bedarf, die Niedertemperaturfähigkeit bestehender Gebäudeheizungsanlagen einfacher abzuschätzen.

Diese Aufgabe wird durch ein Verfahren mit den Merkmalen des Anspruchs 1 und eine Vorrichtung mit den Merkmalen des Anspruchs 9 gelöst. Das vorgeschlagene Verfahren umfasst zumindest die folgenden Verfahrensschritte:
Ein erster Verfahrensschritt sieht das Ermitteln der Gesamt-Heizkörperleistung *Q̇ᵢₙₛ* der im Gebäude installierten Heizkörper vor.

Die Gesamt-Heizkörperleistung *Q̇ᵢₙₛ* der im Gebäude installierten Heizkörper hängt von der Größe der Heizkörper, insbesondere deren Oberfläche zur Umgebung, und dem Auslegungspunkt A der Gebäudeheizungsanlage ab. Der Auslegungspunkt A der Gebäudeheizungsanlage wird üblicherweise durch drei Temperaturen beschrieben: die Vorlauftemperatur *ϑ_{V}* am Vorlauf der Heizkörper, die Rücklauftemperatur *ϑ_{R}* am Rücklauf der Heizkörper und die Raumlufttemperatur *ϑ_{L}*, die für das Gebäude eingestellt werden soll. Typische Auslegungspunkte A sind also durch die Tupel (*ϑ_{V}*, *ϑ_{R}*, *ϑ_{L}*) beschrieben, etwa (90°C, 70°C, 20°C) für alte Heizungsanlagen oder (70°C, 50°C, 20°C) für moderne Heizungsanlagen.

Die Heizkörperleistung *Q̇_{ins,A,i}* jedes der im Gebäude installierten Heizkörper *i* ist für einen Auslegungspunkt A bekannt, entweder aus der Heizkostenverteilung (bspw. als notwendige Parametrierung der elektronischen Heizkostenverteiler mit dem Wert *K_{Q,i}* für den Auslegungspunkt A) oder aus Planungsdaten der Gebäudeheizungsanlage, oder kann durch Identifikation der installierten Heizkörper und Ablesen aus Datenblättern für verschiedene Auslegungspunkte A ermittelt werden.

Damit liegen die für diesen Verfahrensschritt benötigen Parameter im Rahmen einer Heizkostenverteilung bereits vor und sind bspw. in einem System zur Heizkostenabrechnung verfügbar.

Maßgeblich für die Wärmeabgabe ist die mittlere Übertemperatur der Heizkörper. Diese ergibt sich für den Auslegungspunkt in etwa durch die Differenz der Hälfte der Summe von Vorlauftemperatur *ϑ_{V}* und Rücklauftemperatur *ϑ_{R}* und der Raumlufttemperatur *ϑ_{L}*, also entsprechend der Formel $\frac{{ϑ}_{V} + {ϑ}_{R}}{2} - {ϑ}_{L}$. (arithmetisches Mittel) Im Auslegungspunkt A=(90°C, 70°C, 20°C) liegt die Übertemperatur also bei etwa 60°C, im Auslegungspunkt A=(70°C, 50°C, 20°C) bei etwa 40°C.

Eine Gesamt-Heizkörperleistung *Q̇ᵢₙₛ* des Gebäudes respektive der zur Raumheizung in dem Gebäude installierten Gebäudeheizungsanlage kann auslegungspunktabhängig als Summe aller Heizkörperleistungen *Q̇_{ins,i,A}* der im Gebäude installierten Heizkörper i in dem jeweiligen Auslegungspunkt der Heizungsanlage beschrieben werden: ${\dot{Q}}_{ins} = {\dot{Q}}_{LS , ins} = {\sum }_{i} {\dot{Q}}_{ins , A , i}$

Aus den Parametern *K_{Q,A,i}* der elektronischen Heizkostenverteiler zur Parametrierung der Heizkörperleistung in einem festgelegten Auslegungspunkt A kann die Gesamt-Heizkörperleistung *Q̇ᵢₙₛ* des Gebäudes einfach ermittelt werden: ${\dot{Q}}_{ins} = {\dot{Q}}_{LS , ins} = {\sum }_{i} {K}_{Q , A , i}$

Die Gesamt-Heizkörperleistung *Q̇ᵢₙₛ* des Gebäudes kann auch als *Q̇_{LS,ins}* bezeichnet werden, wobei der Index *LS* zusätzlich klarstellt, dass sich die Gesamt-Heizkörperleistung auf das Gebäude (Liegenschaft) bezieht. Dies gilt in diesem Text allgemein für jede mit diesem Index versehene Größe. Die Gesamt-Heizkörperleistung *Q̇ᵢₙₛ* ist auch auf den jeweiligen Auslegungpunkt A bezogen, d.h. könnte auch als *Q̇_{ins,A}* bezeichnet werden.

Je nach Auslegungspunkt A ergeben sich also unterschiedliche Werte für die Gesamt-Heizkörperleistung im Auslegungspunkt (90°C, 70°C, 20°C) (*Q̇ᵢₙₛ*(90°C, 70°C, 20°C) = *Q̇*₆₀) oder im Auslegungspunkt (70°C, 50°C, 20°C) (*Q̇ᵢₙₛ*(70°C, 50°C, 20°C) = *Q̇*₄₀). Nachfolgend werden auch die Kurzschreibweisen *Q̇*₆₀ oder *Q̇*₄₀ zur Beschreibung der Gesamt-Heizkörperleistung *Q̇ᵢₙₛ* bei den vorgenannten, typischerweise betrachteten Auslegungspunkten A verwendet. Dies gilt entsprechend für beliebige Auslegungspunkte *Aⱼ.*

Die individuelle Heizkörperleistung *Q̇_{ins,A,i}* und folglich auch die Gesamt-Heizkörperleistung *Q̇ᵢₙₛ* kann durch die folgenden Formeln zwischen Referenzsystemen mit verschiedener Übertemperatur (d.h. bei den verschiedenen Auslegungspunkten) umgerechnet werden: ${\dot{Q}}_{40 , i} = {\dot{Q}}_{60 , i} ∗ {\left(\frac{40}{60}\right)}^{1 , 3} = {K}_{Q , A , i} ∗ {\left(\frac{40}{60}\right)}^{1 , 3}$ oder${\dot{Q}}_{40} = {\dot{Q}}_{ins , 40} = {\dot{Q}}_{LS , ins , 40} = {\sum }_{i} {\dot{Q}}_{40 , i} .$

Hier sind der Vollständigkeit halber teilweise auch verschiedene Schreibweisen derselben Größen angegeben. Näherungsweise kann man auch vereinfacht umrechnen: ${\dot{Q}}_{40 ,} = {\dot{Q}}_{ins , 40} = {\dot{Q}}_{LS , ins , 40} = {\dot{Q}}_{60} ∗ {\left(\frac{40}{60}\right)}^{1 , 3} ,$ wobei "60" die Übertemperatur des Ausgangs-Referenzsystems (Auslegungspunkt der Heizungsanlage) und "40" die Übertemperatur des Ziel-Referenzsystems (Auslegungspunkt der Heizungsanlage) beschreiben, und "1,3" den üblicherweise als n bezeichneten Heizkörperexponenten beschreibt. Die Formel kann also auch entsprechend verallgemeinert geschrieben werden, je nach Umrechnung zwischen verschiedenen Auslegungspunkten A. In diesem Sinne sind die Werte "40", "60" und "1,3" als Variablen zu verstehen, die durch genauere Werte oder (bei anderen Auslegungspunkten) andere Übertemperaturen ersetzt werden können.

Für genaue Betrachtungen berechnet sich die für die Wärmeabgabe relevante Übertemperatur der Heizkörper in Form der logarithmischen Übertemperatur Δ*_{log}* und nicht als das zuvor beschriebene arithmetische Mittel. Bei den Temperaturen im Auslegungspunkt A unterscheidet sich das arithmetische Mittel aber nur geringfügig vom logarithmischen Mittel (z.B. für 60°C zu 59,44°C bzw. für 40°C zu 39,15°C), so dass bspw. in diesem Fall zur Vereinfachung auch mit dem arithmetischen Mittel gerechnet wird oder werden kann.

In allgemeiner Schreibweise kann die genaue Umrechnung einer Gesamt-Heizkörperleistung *Q̇*_{*A*1} (oder entsprechend einer Heizkörperleistung *K*_{*Q,A*1}) bei einem ersten Auslegungspunkt A₁ der Gebäudeheizungsanlage in eine Heizkörperleistung *Q̇*_{*A*2} (oder entsprechend einer Heizkörperleistung *K*_{*Q,A*2}) bei einem ersten Auslegungspunkt A₂ der Gebäudeheizungsanlage umgerechnet werden durch ${\dot{Q}}_{A 2} = {\dot{Q}}_{A 1} ∗ {\left(\frac{{Δ}_{log , A 2}}{{Δ}_{log , A 1}}\right)}^{{n}_{HK}} ,$ wobei Δ*_{log,Aj}* die logarithmische Übertemperatur im jeweiligen Auslegungspunkt Aⱼ und *n_{HK}* der Heizkörperexponent ist. Diese Größen werden später noch genauer definiert.

Ein zweiter Verfahrensschritt, der von dem ersten Verfahrensschritt unabhängig ist und daher (zeitlich gesehen) auch vor dem ersten Verfahrensschritt durchgeführt werden kann, sieht das Ermitteln einer (bspw. mittleren) Außentemperatur ϑ*_{A}* in dem zeitlichen Heizabschnitt Δ*T_{HA}* an dem Gebäude vor. Damit ist die Außentemperatur ϑ*_{A}* an dem Gebäude für jeden Heizabschnitt Δ*T_{HA}* bekannt, und kann mit der Heizleistung in dem jeweiligen Heizabschnitt Δ*T_{HA}* bzw. mit der während des jeweiligen Heizabschnitts Δ*T_{HA}* abgegebenen Wärmemenge korreliert werden. Die Außentemperatur kann bspw. während jedes Heizabschnitt Δ*T_{HA}* bspw. durch am Gebäude angebrachte Außentemperatursensoren erfasst und gemittelt werden. Alternativ kann die Außentemperatur regionalen Wetterdaten entnommen und zur weiteren Verarbeitung gespeichert werden.

Ein dritter Verfahrensschritt, der von den vorherigen Verfahrensschritten unabhängig ist und daher (zeitlich gesehen) auch vor den vorherigen Verfahrensschritten oder parallel durchgeführt werden kann, sieht vor, eine aktuelle Heizleistung *Q̇_{LS}* der im Gebäude 3 installierten Heizkörper 6 in einem Heizabschnitt (Δ*T_{HA}*) zu ermitteln. Dies kann bevorzugt durch Heizkostenverteiler eines Heizkosten-Abrechnungssystems erfolgen, wobei Heizkostenverteiler zur Erfassung von Heizkörpertemperatur(en) und vorzugsweise auch einer Raumlufttemperatur an den Heizkörpern der Gebäudeheizungsanlage montiert sind. Grundsätzlich kann die aktuelle Heizleistung auch durch Wärmezähler direkt erfasst werden.

Bei einem Heizkostenverteiler, der an einem Heizkörper montiert bzw. einem Heizkörper zugewiesen ist, kann die aktuelle Heizkörperleistung *Q̇_{HK,A,i}* jeweils bezogen auf den Auslegungspunkt A der Heizungsanlage aus den am Heizkörper ermittelten Temperaturwerten ermittelt werden.

Bei Heizkostenverteilern ergibt sich die aktuelle Heizkörperleistung *Q̇_{HK,A,i}* im Auslegungspunkt A als ${\dot{Q}}_{HK , A , i} = {\dot{Q}}_{A , i} ⋅ {\left(\frac{{Δ}_{log , i}}{{Δ}_{log , A}}\right)}^{{n}_{HK , i}}$

Hierbei sind *Q̇_{A,i}* die bekannte Heizkörperleistung des Heizkörpers im Auslegungspunkt, also bspw. *Q̇*_{60,*i*} oder *Q̇*_{40,*i*} wie zuvor erläutert. *n_{HK,i}* ist der Heizkörperexponent, der nach DIN EN 834 als *n_{HK,i}* = 1,3 abgeschätzt werden kann, wenn der wahre Heizkörperexponent nicht bekannt ist. Der Heizkörperexponent *n_{HK,i}* kann auch abhängig von dem Ausgangspunkt A unterschiedlich angegeben werden.

Δ*_{log,i}* ist die individuelle logarithmische Übertemperatur des Heizkörpers, die durch die Gleichung ${Δ}_{log} = \frac{{ϑ}_{V} - {ϑ}_{R}}{ln \frac{{ϑ}_{V} - {ϑ}_{L}}{{ϑ}_{R} - {ϑ}_{L}}}$ für einen individuellen Heizkörper definiert ist, wobei hier auf die Indexierung i verzichtet wird, und es sind *ϑ_{V}* die Vorlauftemperatur, *ϑ_{R}* die Rücklauftemperatur des Heizmediums und *ϑ_{L}* die Raumlufttemperatur am Heizkörper sind. Δ*_{log,A}* ist die logarithmische Übertemperatur für die jeweiligen Temperaturen im Auslegungspunkt A, wie beschrieben.

Bei einem 2-Fühler-Heizkostenverteiler, bei dem die Heizkörpertemperatur *ϑ_{HK}* an der Oberfläche des Heizkörpers und die Raumlufttemperatur ϑ*_{L}* erfasst werden, wird die Differenz *ϑ_{HK}-ϑ_{L} =* Δ*_{EHKV}* als Heizkostenverteiler-Temperaturdifferenz Δ*_{EHKV}* bezeichnet.

Für den Auslegungspunkt A=(90°C, 70°C, 20°C) lässt sich die aktuelle Heizkörperleistung mit festem Heizkörperexponenten (bspw. n_{HK}=1,3) schreiben als ${\dot{Q}}_{HK , 60 , i} = {\dot{Q}}_{60 , i} {\left(\frac{{Δ}_{log , i}}{{Δ}_{log , 60}}\right)}^{{n}_{HK}} = {K}_{Q , 60 , i} ⋅ {\left(\frac{{K}_{CW , i} ⋅ {K}_{CL , i} ⋅ {Δ}_{EHKV , i}}{59 , 44}\right)}^{{n}_{HK}}$

Hierbei ist *K*_{*Q*,60,*i*} die Heizkörperleistung im Auslegungspunkt A=(90°C, 70°C, 20°C). Der Index "60" steht grundsätzlich für einen beliebigen Auslegungspunkt Aⱼ.

Für den Auslegungspunkt A=(70°C, 50°C, 20°C) lässt sich die Heizkörperleistung *K*_{*Q,*60,*i*} im Auslegungspunkt A=(90°C, 70°C, 20°C) entsprechend umrechnen: ${K}_{Q , 40 , i} = {K}_{Q , 60 , i} {\left(\frac{39 , 15}{59 , 44}\right)}^{{n}_{HK}}$

Damit gilt für die aktuelle Heizkörperleistung im Auslegungspunkt A=(70°C, 50°C, 20°C): ${\dot{Q}}_{HK , 40 , i} = {\dot{Q}}_{40 , i} {\left(\frac{{Δ}_{log , i}}{{Δ}_{log , 60}}\right)}^{{n}_{HK}} = {K}_{Q , 60 , i} ⋅ {\left(\frac{39 , 15}{59 , 44}\right)}^{{n}_{HK}} {\left(\frac{{K}_{CW , i} ⋅ {K}_{CL , i} ⋅ {Δ}_{EHKV , i}}{39 , 15}\right)}^{{n}_{HK}}$

*K_{CW,i}* und *K_{CL,i}* sind die heizkörpertypabhängigen Parameter der Heizkostenverteiler zur thermischen Ankopplung der Heizkostenverteiler an den Heizkörper respektive die Umgebungsluft. Diese Werte sind im Heizkosten-Abrechnungssystem bekannt. Dies gilt grundsätzlich für verschiedene Auslegungspunkte Aⱼ.

Damit lassen sich aus einer Heizkostenverteilung bzw. aus den Temperatur- oder Zählerwerten der elektronischen Heizkostenverteiler die aktuellen Heizköperleistungen *Q̇_{HK,A,i}* aller Heizköper *i* in einem beliebigen Auslegungspunkt A der Gebäudeheizungsanlage ermitteln. Entsprechend ergibt sich die aktuelle Heizleistung *Q̇_{LS,A}* des Gebäudes (Liegenschaftsleistung) im Auslegungspunkt A durch die Summe der aktuellen Heizköperleistungen *Q̇_{HK,A}* aller Heizköper *i:* ${\dot{Q}}_{LS , A} = {\sum }_{i} {\dot{Q}}_{HK , A , i}$

Die aktuelle Heizleistung *Q̇_{LS,A}* des Gebäudes (Liegenschaftsleistung) kann auch aus den Zählerinkremente Δ*Z_{HK}* oder anderen aus Sensorwerten (in der Praxis typischerweise Temperaturwerten) der Heizkostenverteiler abgeleiteten Zählerwerten der Heizkostenverteiler ermittelt werden. Beispielsweise kann anstelle einer aktuellen Heizleistung *Q̇_{LS,A}* des Gebäudes (Liegenschaftsleistung) in einer physikalischen Leistungseinheit (wie üblicherweise "Kilowattstunden", kWh) die aktuelle Heizleistung des Gebäudes auch in anderen physikalischen Einheiten angegebenen werden. Beispiele hierfür werden nachstehend erläutert, die erfindungsgemäß auch besonders sinnvoll umsetzbar sind.

Eine erste erfindungsgemäße Möglichkeit sieht vor, die aktuelle Heizleistung eines Heizkörpers als Zählerinkremente Δ*Z_{HK}* zu messen. Zählerinkremente *Z_{HK}* der Heizkostenverteiler messen die aktuelle Heizkörperleistung *Q̇_{HK}* über eine Messzeit Δt, integrieren die aktuelle Heizkörperleistung *Q̇_{HK}* also über die Messzeit Δt auf und bestimmen die innerhalb dieser Messzeit abgegebene Wärmemenge.

Näherungsweise (unter der Annahme, dass sich die aktuelle Heizkörperleistung *Q̇_{HK}* über eine Messzeit Δt nicht nennenswert ändert bzw. eine über die Messzeit gemittelte aktuelle Heizkörperleistung *Q̇_{HK}* ist) kann das aktuelle Zählerinkrement Δ*Z_{HK}* beschrieben werden als $Δ {Z}_{HK , A , i} = Δt ⋅ {\dot{Q}}_{HK , A , i} = Δt ⋅ {\dot{Q}}_{A , i} {\left(\frac{{Δ}_{log , i}}{{Δ}_{log , norm}}\right)}^{{n}_{HK}}$

Für einen Auslegungspunkt A=(90°C, 70°C, 20°C) gilt entsprechend $Δ {Z}_{HK , 60 , i} = Δt ⋅ {K}_{Q , 60 , i} ⋅ {\left(\frac{{K}_{CW , i} ⋅ {K}_{CL , i} ⋅ {Δ}_{EHKV , i}}{59 , 44}\right)}^{{n}_{HK}} ,$ wobei auch das Zählerinkrement Δ*Z_{HK,A,i}* wie oben angegeben auf andere Auslegungspunkte umrechenbar ist.

Ein Zählerinkrement Δ*Z_{HK,A,i}* kann auch als Wärmeinkrement bezeichnet werden.

Ein Zählerwert *Z_{HK,A,i}* für einem Heizabschnitt Δ*T_{HA},* bspw. einen ganzen Tag oder einen anderen Zeitraum, wie vorstehend bereits diskutiert, ergibt sich aus der Summe der aktuellen Zählerinkremente Δ*Z*_{*HH*,*l*} über den Heizabschnitt Δ*T_{HA}* ${Z}_{HK , A , i} = {\sum }_{l} Δ {Z}_{HK , A , i , l}$

Sofern der Heizabschnitt Δ*T_{HA}* Zeitabschnitte enthält, in der die Gebäudeheizungsanlage eingeschaltet war, und Zeitabschnitte, in der die Gebäudeheizungsanlage ausgeschaltet oder in einer Nachtabsenkung betrieben wurde, ist es für die Betrachtung der Niedertemperaturfähigkeit der Gebäudeheizungsanlage sinnvoll, die Zählerwerte *Z_{HK,A,i}* bzw. die über einen Heizabschnitt gemittelte Heizkörperleistung *Q̇_{HK,A,i}* (oder die entsprechenden auf das Gebäude bezogenen Werte, die sich aus der Summe über alle jeweiligen Heizkörperwerte ergeben), auf die Betriebszeit der Gebäudeheizungsanlage während des Heizabschnitts zu beziehen bzw. zu normieren, d.h. auf die Zeit, in der die Gebäudeheizungsanlage eingeschaltet war.

Wenn beispielsweise der Heizabschnitt Δ*T_{HA}* einen Tag beträgt und der Heizkostenverteiler nur einen Zählerwert *Z_{HK,A,i}* für das über den gesamten Tag integrierte Zählerinkrement zur Verfügung stellt, kann daraus die tatsächliche aktuelle Heizleistung während der Betriebszeit der Gebäudeheizungsanlage im Heizabschnitt Δ*T_{HA}* wie folgt ermittelt werden:
Hierbei ist t die Betriebszeit der Gebäudeheizungsanlage während des Heizabschnitts Δ*T_{HA}.* Für einen Tag als Heizabschnitt können bspw. typische Werte für *t* zwischen 8*h < t <* 15*h* angenommen werden. Bei einem typischen Betrieb von Heizungsanlagen kann ein Wert von *t* = 12*h* angemessen sein.

Eine mittlere Heizkörperleistung *Q̇_{HK,A,i}* für den Heizabschnitt Δ*T_{HA}* ergibt sich in dieser Ausführungsform also durch ${\dot{Q}}_{HK , A , i} = \frac{{Z}_{HK , A , i}}{t}$

Entsprechendes gilt, wenn der Heizkostenverteiler über einen längeren Heizabschnitt gemittelte "aktuelle" Heizkörperleistungen *Q̅̇̅_̅{̅H̅K̅,̅A̅,̅i̅}̅* anstelle von Zählerwerten *Z_{HK,A,i}* für den Heizabschnitt Δ*T_{HA}* zur Verfügung stellt.

Wie zuvor anhand von bevorzugten Beispielen erläutert, kann die aktuelle Heizleistung *Q̇_{LS}* des Gebäudes gemäß einer besonders bevorzugten Ausführungsform der Erfindung aus den aktuellen Heizkörperleistungen *Q̇_{HK,i}* der im Gebäude installierten Heizkörper mittels von Heizkostenverteilern erfassten Werten ermittelt werden, bezogen auf einen Auslegungspunkt A. Dies hat den Vorteil, dass für die Ermittlung der Niedertemperaturfähigkeit von Gebäudeheizungsanlagen auf Daten zurückgegriffen werden kann, die im Rahmen einer Heizkostenverteilung durch Heizkostenverteiler ohnehin erfasst werden. Weitere heizungsbezogene Daten werden in dieser Ausführungsform zur Durchführung des Verfahrens nicht benötigt. Die von Heizkostenverteilern erfassten Werte sind insbesondere aus gemessenen Sensorwerten der Heizkostenverteiler abgeleitete Werte. Dies können gemäß einer bevorzugten Ausführungsform Temperaturwerte, Zählerwerte oder andere den Wärmeverbrauch oder die Heizleistung der Heizkörper anzeigende Werte sein.

Eine weitere Möglichkeit zur Angabe einer der aktuellen Heizkörperleistung entsprechenden Größen liegt in der Angabe von Vollbenutzungsstunden *b*. Dies wird nachstehend erläutert.

Der Zählerwert *Z_{HK,A,i}* für einem Heizabschnitt Δ*T_{HA}* ist ein Maß für die in dem Heizabschnitt Δ*T_{HA}* abgegebene Wärmemenge, d.h. die über den Zeitraum "Heizabschnitt Δ*T_{HA}*" aufsummierte / integrierte aktuelle Wärmeleistung. Leistung ist definiert als Energie ("abgegebene Wärmemenge") pro Zeit.

Eine Größe ${b}_{HK , A , i} = \frac{{Z}_{HK , A , i}}{{K}_{Q , A , i}}$ die die den aktuellen Zählerwert *Z_{HK,A,i}* (Einheit "Energie") eines Heizkostenverteilers für einen Heizkörper durch die nominale Heizkörperleistung *K_{Q,A,i}* (Einheit "Energie pro Zeit") im durch den Betrieb der GebäudeHeizungsanlage vorgegeben Auslegungspunkt A teilt, hat also die Einheit "Zeit". Die Größe gibt an, für welche Zeitdauer die Gebäudeheizungsanlage im Auslegungspunkt (d.h. mit der im Auslegungspunkt vorgesehenen Heizleistung) betrieben werden muss, damit der Heizkörper die durch den Zählerwert erfasste Energiemenge (Wärmemenge) abgibt. Diese Größe wird daher auch als Vollbenutzungsstunden *b* bezeichnet. Vollbenutzungsstunden *b* sind definiert als die Stundenzahl, für die eine Gebäudeheizungsanlage unter Volllast (im Auslegungspunkt A) betrieben werden muss, um eine bestimmte Wärmemenge abzugeben.

Wenn die Gebäudeheizungsanlage im Auslegungspunkt durchgehend betrieben wird (zumindest in den vorgesehen Heizzeiten der Gebäudeheizungsanlage), ergibt sich maximal die abgebbare Wärmemenge pro Heizkörper (als Zählerwert ${Z}_{HK , A , i}^{max}$) in dem Heizabschnitt Δ*T_{HA}* als ${Z}_{HK , A , i}^{max} = {K}_{Q , A , i} ⋅ Δ {T}_{HA}$

Für alle Heizkörper i im Gebäude (d.h. in diesem Text: die durch die Gebäudeheizungsanlage mit Heizwärme versorgten Heizkörper) ergeben sich die der aktuellen Heizleistung *Q̇_{LS,A}* des Gebäudes (Liegenschaftsleistung) entsprechenden aktuellen Vollbenutzungsstunden *b_{LS,A}* als Summe der Vollbenutzungsstunden *b_{HK,A,i}* der einzelnen Heizkörper *i:* ${b}_{LS , A} = {\sum }_{i} {b}_{HK , A , i}$

Die der Gesamt-Heizkörperleistung *Q̇ᵢₙₛ* der im Gebäude installierten Heizkörper entsprechenden Gesamt-Vollbenutzungsstunden *bᵢₙₜ,* in denen bezogen auf den Heizabschnitt Δ*T_{HA}* die maximal abgebbare Wärmemenge im Auslegungspunkt A der Heizungsanlage abgegeben wird, ergeben sich entsprechend aus der Summe der nominalen Heizkörperleistungen *K_{Q,A,i}* aller Heizkörper *i* multipliziert mit der zeitlichen Dauer des Heizabschnitts Δ*T_{HA}*, dividiert durch die Summe der nominalen Heizkörperleistungen *K_{Q,A,i}* aller Heizkörper *i:* ${b}_{ins} = \frac{{\sum }_{i} {K}_{Q , A , i} ⋅ Δ {T}_{HA}}{{\sum }_{i} {K}_{Q , A , i}} = Δ {T}_{HA}$

Bei dieser Betrachtung kann die Dauer des Heizabschnitts Δ*T_{HA}* ggf. auch begrenzt werden auf die Betriebszeit t der Gebäudeheizungsanlage während des Heizabschnitts Δ*T_{HA}*, wie weiter oben in anderem Zusammenhang bereits diskutiert.

Eine Umrechnung auf andere Auslegungspunkte A ist jeweils entsprechend wie oben abgegeben möglich.

In einem weiteren Verfahrensschritt wird eine Heizleistungsreserve *r_{HA}* für den Heizabschnitt Δ*T_{HA}* aus einem Vergleich der wie zuvor beschriebenen aktuellen Heizleistung *Q̇_{LS}* in dem Heizabschnitt Δ*T_{HA}* und der Gesamt-Heizkörperleistung *Q̇ᵢₙₛ* im Auslegungspunkt bestimmt.

Gemäß einer bevorzugten Ausführungsform kann die Heizleistungsreserve *r_{HA}* in dem Heizabschnitt Δ*T_{HA}* auf einem Quotienten von installierter Gesamt-Heizkörperleistung des Gebäudes *Q̇ᵢₙₛ* und aktueller Heizleistung vorzugsweise aller Heizkörper des Gebäudes *Q̇_{LS}* basieren. Je größer dieser Quotient ist, desto höher ist die Heizleistungsreserve im Heizabschnitt Δ*T_{HA}.* Der Quotient ist eine effektive Größe zum Vergleichen von Werten. Sie ist dimensionslos und hat den Wert 1, wenn die zu vergleichenden Werte betragsmäßig gleich sind.

Gemäß einer besonders bevorzugten, konkreten Ausgestaltung der Erfindung kann die Heizleistungsreserve r für die Gebäudeheizungsanlage definiert sein als ${r}_{HA} = \frac{{\dot{Q}}_{ins}}{{\dot{Q}}_{LS}} - 1 ,$ wobei die Gesamt-Heizkörperleistung *Q̇ᵢₙₛ* und die aktuelle Heizkörperleistung *Q̇_{LS}* auf denselben Auslegungspunkt A der Gebäudeheizungsanlage bezogen sein müssen und ggf. entsprechend umgerechnet werden müssen. Dies wurde bereits ausführlich beschrieben. Eine so definierte Heizleistungsreserve *r* hat den Wert Null, wenn die maximale Leistung der im Gebäude installierten Heizköper (im Auslegungspunkt) gerade ausreicht, um die aktuell benötigte Heizleistung zur Verfügung zu stellen. Ein negativer Wert zeigt eine aktuelle Unterversorgung an. Ein positiver Wert stellt eine Heizleistungsreserve dar, in der das Gebäude stärker geheizt werden könnte als aktuell benötigt.

Die aktuelle Heizleistung *Q̇_{LS}* kann, wie zuvor beschrieben, auch durch aktuelle Vollbenutzungsstunden *b_{LS}* beschrieben werden, und die Gesamt-Heizkörperleistung *Q̇ᵢₙₛ* kann, wie zuvor beschrieben, auch durch Gesamt-Vollbenutzungsstunden *bᵢₙₜ* beschrieben werden.

In diesem Fall kann gemäß einer bevorzugten Ausführungsform die Heizleistungsreserve *r_{HA}* in dem Heizabschnitt Δ*T_{HA}* auf einem Quotienten von Gesamt-Vollbenutzungsstunden *bᵢₙₛ* und basieren aktuellen Vollbenutzungsstunden *b_{LS}.* Je größer dieser Quotient ist, desto höher ist die Heizleistungsreserve im Heizabschnitt Δ*T_{HA}*. ${r}_{HA} = \frac{{b}_{ins}}{{b}_{LS}} - 1 ,$ wobei die Vollbenutzungsstunden auf denselben Auslegungspunkt A der Gebäudeheizungsanlage bezogen sein müssen und ggf. entsprechend umgerechnet werden müssen. Dies wurde bereits ausführlich beschrieben. Die Bewertung der Heizleistungsreserve r entspricht der obigen Diskussion.

Eine so oder ähnlich definierte Heizleistungsreserve *r* ist also ein geeignetes Maß dafür, wie stark die installierte Auslegungs-Heizkörperleistung *Q̇ᵢₙₛ, bᵢₙₛ* (d.h. die Gesamt-Heizkörperleistung aller installierten Heizkörper im Auslegungspunkt der Heizungslage) in dem Heizabschnitt Δ*T_{HA}* durch die tatsächlich benötigte Heizleistung *Q̇ₘₐₓ, bᵥ* der im Gebäude installierten Heizkörper ausgenutzt wurde. Grundsätzlich ist als Heizleistungsreserve *r* jede Größe geeignet, die die in einem Heizabschnitt Δ*T_{HA}* aktuell verbrauchte Heizleistung mit einer in der Gebäudeheizungsanlage maximal zur Verfügung stehenden Heizleistung ins Verhältnis setzt.

Der Wert der Heizleistungsreserve *r* ist in der Regel abhängig von der Außentemperatur ϑ*_{A}*. Dies liegt daran, dass die installierte Gesamt-Heizköperleistung *Q̇ᵢₙₛ* im Gebäude auf die Normaußentemperatur ausgelegt ist, die definitionsgemäß die niedrigste Außentemperatur ist, bei der die Gebäudeheizungsanlage das Gebäude gerade noch auf eine gewünschte Raumtemperatur, bspw. 20°C, heizen kann. Entsprechend sollte bei Außentemperatur ϑ*_{A}* größer als die Normaußentemperatur die maximale Heizleistung der Gebäudeheizungsanlage nicht ausgenutzt werden und eine positive Heizleistungsreserve angezeigt werden. Daher ist eine Heizleistungsreserve *r,* die in einem Heizabschnitt Δ*T_{HA}* mit einer höheren Außentemperatur ϑ*_{A}* als der Normaußentemperatur bestimmt wurde, für die Wärmepumpeneignung der Gebäudeheizungsanlage nur bedingt aussagekräftig.

Das erfindungsgemäße Verfahren sieht daher in einem weiteren Verfahrensschritt vor, die Heizleistungsreserve *r* für mehrere zeitliche Heizabschnitte Δ*T_{HA}* eines zeitlichen Betrachtungszeitraums Δ*T_{B}* zu bestimmen. Damit wird die Heizleistungsreserve *r* bei verschiedenen, in diesen Zeitabschnitten erfassten und typischerweise gemittelten Außentemperaturen ϑ*_{A}* ermittelt. Vorzugsweise umfasst der Betrachtungszeitraum Δ*T_{B}* eine ganze Heizperiode, zumindest die typischerweise kältesten Monate einer Heizperiode. Hierdurch wird auch die Zeit während einer Heizperiode erfasst, in der die Gebäudeheizungsanlage die größte Heizleistung erbringen muss. Dies sind typischerweise der bzw. die Heizabschnitte Δ*T_{HA}* mit der niedrigsten Außentemperatur *ϑ_{A}*. In einem solchen Fall liefert der Heizabschnitt Δ*T_{HA}* mit der Außentemperatur ϑ*_{A}* und/oder der Heizabschnitt Δ*T_{HA}* mit der niedrigsten Heizleistungsreserve *r* bereits eine gute Abschätzung für die Wärmetauglichkeit der Heizungsanlage. Der Begriff "Heizleistungsreserve *r"* soll in diesem Text alle konkret vorgeschlagenen Heizleistungsreserven, insbesondere auch die Heizleistungsreserve *r_{HA},* miteinschließen.

Gemäß diesem Verfahrensschritt wird also vorgeschlagen, das zuvor für genau einen Heizabschnitt Δ*T_{HA}* beschriebene Verfahren für mehrere verschiedene Heizabschnitt Δ*T_{HA},* d.h. zu verschiedenen Zeiten, zu wiederholen, bis ein (frei wählbarer) Betrachtungszeitraum Δ*T_{B}* abgeschlossen ist. Gemäß einer besonders bevorzugten Ausführungsform schließen die jeweils zwei Heizabschnitte Δ*T_{HA}* zeitlich unmittelbar aneinander an, so dass während des Betrachtungszeitraums Δ*T_{B}* zeitlich lückenlos die Heizleistungsreserve *r* ermittelt und gespeichert wird. Dies ist aber nicht unbedingt notwendig, also optional. Wenn ein Heizabschnitt Δ*T_{HA}* bspw. genau einen Tag beträgt, liegt dann für jeden Tag während des Betrachtungszeitraums Δ*T_{B}* ein Wert für die Heizleistungsreserve r vor.

Allerdings gibt es wärmere und kältere Jahre, so dass selbst, wenn der Betrachtungszeitraum Δ*T_{B}* eine gesamte Heizperiode erfasst, nicht sichergestellt werden kann, dass tatsächlich in einem Heizabschnitt Δ*T_{HA}* eine mindestens der Normaußentemperatur (oder kälter) entsprechende Außentemperatur ϑ*_{A}* erfasst wurde.

Daher schlägt die Erfindung gemäß einem weiteren Verfahrensschritt vor, eine Norm-Heizleistungsreserve ${r}_{LS}^{N}$ für das Gebäude bei einer Normaußentemperatur ${ϑ}_{A}^{N}$ zu bestimmen aus den Heizleistungsreserven *r* für die mehreren Heizabschnitte Δ*T_{HA}* in dem Betrachtungszeitraum Δ*T_{B}.* Auf die Normaußentemperatur ${ϑ}_{A}^{N}$ ist die Gebäudeheizungsanlage im Auslegungspunkt bezogen. Es wird also eine Interpolation oder Extrapolation der während der mehreren Heizabschnitte Δ*T_{HA}* erfassten Heizleistungsreserven *r,* bspw. der Heizleistungsreserven *r_{HA},* vorgeschlagen, um die tatsächliche Heizleistungsreserve *r* im für die Bewertung der Niedertemperaturfähigkeit der Gebäudeheizungsanlage relevanten Auslegungspunkt A zu ermitteln. Es hat sich herausgestellt, dass trotz einer gewissen Streuung der Werte der Heizleistungsreserven *r* bei einer bestimmten Außentemperatur ϑ*_{A}* ein Trend für eine mittlere Abhängigkeit der Heizleistungsreserve *r* von der Außentemperatur ϑ*_{A}* ermittelbar ist, was eine entsprechende Vorhersage ermöglicht.

Gemäß einer besonders bevorzugten Ausführungsform der Erfindung wird entsprechend vorgeschlagen, dass aus Messwertpaaren *MWP =* (*r,ϑ_{A}*) für die mehreren Heizabschnitte Δ*T_{HA}*, jeweils gebildet aus der Heizleistungsreserve *r,r_{HA}* und der vorzugsweise mittleren Außentemperatur ϑ*_{A}* für den jeweiligen Heizabschnitt Δ*T_{HA}*, eine Regressionskurve *r_{LS}*(*ϑ_{A}*) als funktionaler Zusammenhang für die Abhängigkeit der Heizleistungsreserve *r_{HA}* von der Außentemperatur ϑ*_{A}* gebildet wird. Damit lässt sich die Heizleistungsreserve *r* für die Gebäudeheizungsanlage für jede Außentemperatur ϑ*_{A}*, auch die Normaußentemperatur, berechnen. Dies ist besonders flexibel.

Eine besonders bevorzugte, konkrete Ausführung dieser Ausführungsform kann vorsehen, dass die Regressionskurve *r_{LS}*(*ϑ_{A}*) entsprechend der Formel ${r}_{LS} \left({ϑ}_{A}\right) = {a}_{0} + {a}_{1} ⋅ {ϑ}_{A} + {a}_{2} ⋅ {ϑ}_{A}^{2}$ gebildet wird, wobei *a*₀, *a*₁, *a*₂ Fitparameter aus einer numerischen Anpassung der Regressionskurve *r_{LS}*(*ϑ_{A}*) an die Messwertpaaren *MWP* sind.

Eine weitere mögliche Regressionskurve *r̂_{LS}*(*ϑ_{A}*) gemäß einer weiteren Ausführungsform kann entsprechend der Formel ${\hat{r}}_{LS} \left({ϑ}_{A}\right) = a ⋅ {e}^{\left(b⋅{ϑ}_{A}\right)} + c$ gebildet werden, wobei *a, b, c* Fitparameter aus einer numerischen Anpassung der Regressionskurve *r̂_{LS}*(*ϑ_{A}*) an die Messwertpaaren *MWP* sind.

Derartige numerische Anpassungen sind dem Fachmann grundsätzlich bekannt und müssen nicht weiter beschrieben werden. Es ist dem Fachmann allerdings nicht bekannt, dass sich die durch eine der Formeln *r_{LS}*(*ϑ_{A}*) oder *r̂_{LS}*(ϑ*_{A}*) vorgeschlagene Regressionskurve besonders gut für eine Beschreibung der Abhängigkeit der die Heizleistungsreserve *r* von der Außentemperatur ϑ*_{A}* eignet. Die Erfindung ist gleichwohl nicht auf diese Formeln besonders bevorzugter Ausführungsformen beschränkt. Der Fachmann kann die Formeln zur Anpassung nach seinem Fachwissen jeweils geeignet wählen und wird entsprechende Anpassungen im Rahmen seines Fachwissens beim Anpassen einer Funktion an Messwerte ohne weiteres verwenden.

Eine Weiterentwicklung des zuvor beschrieben Verfahrens kann gemäß einer weiteren Ausführungsform vorsehen, dass die Messwertpaare *(MWP)* für verschiedene Gebäude und die aktuelle Heizleistung *Q̇_{LS}* eines jeweiligen Gebäudes auf die Wohnfläche *A_{LS}* bezogen und als spezifische Heizleistung *q̇_{LS}* bestimmt werden. In diesem Fall kann die Regressionskurve *s_{LS}*(*q_{LS},*ϑ_{A}),*ŝ_{LS}*(*q̇_{LS},*ϑ*_{A}*) für die Abhängigkeit der Heizleistungsreserve *r* von der spezifische Heizleistung *q̇_{LS}* und der Außentemperatur ϑ*_{A}* gebildet werden. Es hat sich herausgestellt, dass die Korrelation der Heizleistung der Gebäudeheizungsanlage am stärksten von der Größe des Gebäudes abhängt, und die Abhängigkeit von dem Gebäudetyp und weiteren Gebäudeeigenschaften eine kleinere ist. Entsprechend ist es sinnvoll, die Heizleistung *Q̇_{LS}* auf die Wohlfläche *A_{LS}* zu normieren und Messwertpaare *(MWP)* auch für mehrere Gebäude bei der Bestimmung der Regressionskurve *s_{LS}*(*q̇_{LS},*ϑ_{A}),*ŝ_{LS}*(*q̇_{LS},*ϑ_{A}) zu berücksichtigen. Die normierte Heizleistung kann als *q̇_{LS} = Q̇_{LS}*/*A_{LS}* bestimmt werden.

Eine besonders bevorzugte, konkrete Ausführung dieser Ausführungsform kann vorsehen, dass die Regressionskurve *s_{LS}*(*q̇_{LS},* ϑ_{A})entsprechend der Formel ${s}_{LS} \left({\dot{q}}_{LS}, {ϑ}_{A}\right) = {a}_{0} \left({\dot{q}}_{LS}\right) + {a}_{1} \left({\dot{q}}_{LS}\right) ⋅ {ϑ}_{A} + {a}_{2} \left({\dot{q}}_{LS}\right) ⋅ {ϑ}_{A}^{2}$ gebildet wird, wobei *a*₀, *a*₁, *a*₂ Fitparameter aus einer numerischen Anpassung der Regressionskurve *s_{LS}*(*q̇_{LS},* ϑ_{A})an die Messwertpaaren *(MWP)* sind, wobei die Fitparameter *a*₀, *a*₁, *a*₂ eine Funktion der spezifische Heizleistung *q̇_{LS}* sind.

Eine weitere mögliche Regressionskurve *ŝ_{LS}*(*q̇_{LS},* ϑ_{A}) gemäß einer weiteren Ausführungsform kann entsprechend der Formel ${\hat{s}}_{LS} \left({\dot{q}}_{LS}, {ϑ}_{A}\right) = a \left({\dot{q}}_{LS}\right) ⋅ {e}^{\left(b\left({\dot{q}}_{LS}\right)⋅{ϑ}_{A}\right)} + c \left({\dot{q}}_{LS}\right) ,$ gebildet werden, wobei *a, b, c* Fitparameter aus einer numerischen Anpassung der Regressionskurve (*ŝ_{LS}*(*q̇_{LS},* ϑ*_{A}*)) an die Messwertpaare *(MWP)* sind, wobei die Fitparameter oder *a, b, c* eine Funktion der spezifischen Heizleistung (*q̇_{LS}*) sind.

Dies vergrößert die Datenbasis für die Bildung der Regressionsgraden und erlaubt eine universelle Abschätzung der Niedertemperaturfähigkeit, auch ohne konkrete Messwerte eines Gebäudes. Die obigen Aussagen zum Durchführen einer Anpassung gelten hier entsprechend.

Erfindungsgemäß können zusätzlich Anpassungen zur Ermittlung einer Regressionsgraden für die Einhüllenden der Messwertpaare *(MWP),* insbesondere für die niedrigeren Werte der Heizleistungsreserve r der Messwertpaare *(MWP),* durchgeführt werden, um die untere Grenze der Niedertemperaturfähigkeit für alle Gebäude abzuschätzen. Die ermittelten Heizleistungsreserven stellen reale Messwerte dar (bzw. sind aus realen Messwerten abgeleitet) und zeigen einen tatsächlichen Bedarf bei der zugehörigen Außentemperatur an. Größere Heizleistungsreserven können systematisch entstehen, wenn Räume über einen gewissen längeren Zeitraum auf eine niedrigere Raumtemperatur eingestellt wurden, bspw. durch Verdrehen des Thermostatventils. Dies kann bei länger nicht genutzten Räumen oder einer Urlaubsabwesenheit vorkommen. Auch thermischer Sonneneintrag im Winter an einem Sonnentag kann zu einer höheren Heizleistungsreserve führen. Wenn es darum geht, eine realistische Heizleistungsreserve zu ermitteln, ist es sinnvoll, sich an dem in realen Situationen erfassten größten Wärmemengenbedarf zu orientieren, also den kleineren Werten der Heizleistungsreserve.

Die Norm-Heizleistungsreserve ${r}_{LS}^{N}$, die bspw. mit einer der vorbeschriebenen Regressionskurven genau und einfach für das Gebäude bestimmbar ist, stellt eine besonders aussagekräftige Größe für die Niedertemperaturfähigkeit der Gebäudeheizungsanlage dar. Die Bewertung erfolgt erfindungsgemäß durch Vergleich der Norm-Heizleistungsverserve ${r}_{LS}^{N}$ mit einem Heizleistungsreserve-Grenzwert *r_{G},* der bspw. abhängig von dem Auslegungspunkt vorgebbar ist. Für eine Norm-Heizleistungsreserve ${r}_{LS}^{N}$, die mit einer der vorbeschriebenen Regressionskurven *r_{LS}*(ϑ*_{A}*), *r̂_{LS}*(ϑ*_{A}*), *s_{LS}*(*q̇_{LS}, ϑ_{A}*) *, ŝ_{LS}*(*q̇_{LS},* ϑ*_{A}*) oder mit einer anderen geeigneten funktionalen Abhängigkeit für eine parametrierbare Auslegungsaußentemperatur und in einem Auslegungspunkt, bspw. A=(70°C, 50°C, 20°C), ermittelt wurde, gilt bspw. *r_{G}* = 0,4 bzw. ${r}_{LS}^{N} \geq 0 , 4$ für eine Wärmepumpeneignung. Der Heizleistungsreserve-Grenzwert *r_{G}* ist grundsätzlich frei parametrierbar, und kann auch von dem Typ und der Effizienz einer gewählten Wärmepumpe oder von Besonderheiten der Heizungsanlage und/oder der verwendeten Heizflächen abhängen.

Die Erfindung betrifft auch eine Vorrichtung zur Ermittlung der Niedertemperaturfähigkeit einer Gebäudeheizungsanlage mit den Merkmalen des Anspruchs 9. Die Vorrichtung weist eine Einrichtung zum Ermitteln einer Gesamt-Heizkörperleistung *Q̇ᵢₙₛ, bᵢₙₛ* von im Gebäude installierten Heizkörpern, eine Einrichtung zum Ermitteln einer Außentemperatur ϑ*_{A}* an dem Gebäude, eine Einrichtung zum Ermitteln einer aktuellen Heizleistung *Q̇_{LS}, b_{LS}* der im Gebäude installierten Heizkörper und eine Recheneinheit auf. Erfindungsgemäß ist die Recheneinheit dazu eingerichtet, das vorbeschriebene Verfahren oder Teile davon, insbesondere ein Verfahren nach einem der Ansprüche 1 bis 8, durchzuführen. Die Recheneinheit kann lokal und/oder dezentral eingerichtet sein, bspw. vollständig oder teilweise in einer Zentrale (etwa zur Heizkostenerfassung) oder einer Datencloud, in der die Messwerte zur Verfügung stehen.

Erfindungsgemäß kann die Einrichtung zum Ermitteln der Gesamt-Heizkörperleistung *Q̇ᵢₙₛ, bᵢₙₛ* von im Gebäude installierten Heizkörpern und zum Ermitteln der aktuellen Heizleistung *Q̇_{LS}, b_{LS}* ein Heizkosten-Abrechnungssystem sein, in diese Daten im Zuge einer Heizkostenabrechnung ohnehin erfasst werden. Die Einrichtung respektive das Heizkosten-Abrechnungssystem kann zum Erfassen der Daten an mindestens einem, weiter bevorzugt an mehreren und gemäß einer besonders bevorzugten Ausführungsform an jedem Heizkörper der Gebäudeheizungsanlage Heizkostenverteiler aufweisen. Die Funktionsweise solcher Heizkostenverteiler wurde bereits beschrieben.

Erfindungsgemäß kann die Einrichtung zum Ermitteln einer Außentemperatur ϑ*_{A}* an dem Gebäude einen Außentemperatursensor aufweisen, wobei die Recheneinheit ggf. dazu eingerichtet sein kann, eine über einen Heizabschnitt Δ*T_{HA}* gemittelte Außentemperatur ϑ*_{A}* zu bestimmen und zur Verwendung in dem vorgeschlagenen Verfahren abzuspeichern. Dazu kann der Außentemperatursensor an die Recheneinheit angeschlossen sein, die den Außentemperatursensor geeignet ansteuert und die (ggf. gemittelten) Außentemperaturwerte in Zeitintervallen speichert

Damit kann die erfindungsgemäße Vorrichtung besonders bevorzugt im Rahmen von bereits installierten Systemen zur Heizkostenverfassung realisiert werden, ohne dass zusätzliche Installationen notwendig sind.

Weitere Vorteile, Merkmale und Anwendungsmöglichkeiten der Erfindung ergeben sich auch aus der nachfolgenden Beschreibung von Ausführungsbeispielen und der Zeichnung. Dabei gehören alle beschriebenen und/oder bildlich dargestellten Merkmale zusammen oder beliebiger fachmännisch sinnvoller Kombination zum Gegenstand der Erfindung, auch unabhängig von ihrer Zusammenfassung in beschriebenen bzw. dargestellten Ausführungsbeispielen oder in den Ansprüchen.

### Es zeigen:

- Fig. 1: ein schematisches Ablaufdiagramm gemäß einer Ausführungsform des erfindungsgemäßen Verfahrens;
- Fig. 2: schematisch eine Vorrichtung gemäß einer Ausführungsform der Erfindung;
- Fig. 3: eine Häufigkeitsverteilung einer nach dem Verfahren gemäß Fig. 1 ermittelten Heizleistungsreserve ${r}_{LS}^{N}$ für einen typischen Gebäudebestand einer Heizkostenverteilung;
- Fig. 4: eine Regressionskurve *r_{LS}*(*ϑ_{A}*) zur Beschreibung für die Abhängigkeit der Heizleistungsreserve *r_{HA}* von der Außentemperatur ϑ*_{A}* gemäß einer Ausführungsform; und
- Fig. 5: eine Regressionskurve *r_{LS}*(*ϑ_{A}*) zur Beschreibung für die Abhängigkeit der Heizleistungsreserve *r_{HA}* von der Außentemperatur ϑ*_{A}* gemäß einer weiteren Ausführungsform.

Mit Bezug auf die Zeichnung werden nachstehend bevorzugte Ausführungsformen des erfindungsgemäßen Verfahrens und der erfindungsgemäßen Vorrichtung beschrieben. Diese dienen der Erläuterung und sollen den Schutzbereich nicht beschränken. In den Ausführungsformen sind nicht alle zuvor erläuterten Varianten, Merkmale und Optionen der Erfindung dargestellt und/oder beschrieben. Insoweit wird auf die vorstehenden Ausführungen verwiesen. Der verständige Fachmann wird diese Varianten, Merkmale und/oder Optionen in sinnvoller Kombination bei den beschriebenen Ausführungsformen ergänzen und/oder austauschen.

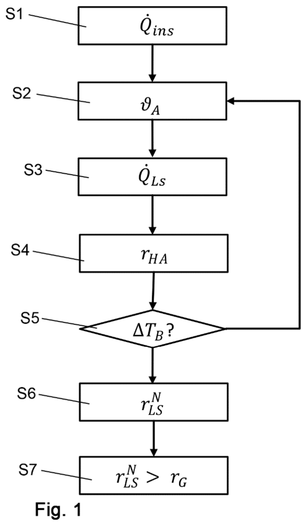

Fig. 1 veranschaulicht wesentliche Verfahrensschritte des erfindungsgemäßen Verfahrens in einer möglichen Reihenfolge. Die Erfindung ist nicht auf die beschriebene Reihenfolge der einzelnen Verfahrensschritte beschränkt; eine Umsetzung der Erfindung ist auch in sinnvoller anderer Reihenfolge möglich, sofern in späteren Verfahrensschritte notwendige Informationen und/oder Werte in früheren Verfahrensschritten ermittelt wurden.

In einem ersten Verfahrensschritt S1 wird die Gesamt-Heizkörperleistung *Q̇ᵢₙₛ* der im Gebäude 3 installierten Heizkörpern 6 erfasst bzw. ermittelt. Diese ist jeweils abhängig von dem wählbaren Auslegungspunkt der Gebäudeheizungsanlage 2, wie beschrieben, und beschreibt die maximale Heizleistung aller Heizkörper 6 (abgegebene Wärmemenge pro Zeit), wenn die Gebäudeheizungsanlage 2 im Auslegungspunkt betrieben wird.

In einem zweiten Verfahrensschritt S2 wird in einem vordefinierten Heizabschnitt Δ*T_{HA}*, bspw. einem Tag, die Außentemperatur ϑ*_{A}* an dem Gebäude 3 ermittelt. Dies kann durch einen Außentemperatursensor 11 als Einrichtung zum Ermitteln der Außentemperatur ϑ*_{A}* erfolgen. Alternativ kann die Außentemperatur an dem Gebäude auch aus regionalen Wetterdaten ermittelt werden, auf die in diesem Verfahrensschritt zugegriffen wird.

In einem dritten Verfahrensschritt S3 wird eine aktuelle Heizleistung *Q̇_{LS}* der im Gebäude 3 installierten Heizkörper 6 in dem Heizabschnitt Δ*T_{HA}* ermittelt. Erfindungsgemäß sind hier verschiedene Möglichkeiten vorgesehen, die vorstehend bereits ausführlich beschrieben wurden. Hierauf wird verwiesen. Grundsätzlich kann hierfür einfacherweise auf die Daten aus einem Heizkosten-Abrechnungssystem 12 mit an den Heizkörpern 6 in dem Gebäude 3 angebrachten Heizkostenverteilern 7 zurückgegriffen werden.

In einem vierten Verfahrensschritt S4 wird aus einem Vergleich der aktuellen Heizleistung *Q̇_{LS}* in dem Heizabschnitt Δ*T_{HA}* und der Gesamt-Heizkörperleistung *Q̇ᵢₙₛ* eine Heizleistungsreserve *r_{HA}* für den Heizabschnitt Δ*T_{HA}* berechnet. Erfindungsgemäß sind hier verschiedene Möglichkeiten vorgesehen, die vorstehend bereits ausführlich beschrieben wurden. Hierauf wird verwiesen. Die Heizleistungsreserve *r_{HA}* und die zugehörige Außentemperatur ϑ*_{A}* werden als Messwertpaar *MWP* für diesen Heizabschnitt Δ*T_{HA}* gespeichert.

Während eines fünften Verfahrensschritts S5 werden die Verfahrensschritte S2 bis S4 für mehrere verschiedene, aufeinanderfolgende Heizabschnitte Δ*T_{HA}* wiederholt, bis der Betrachtungszeitraum Δ*T_{B}* abgelaufen ist. Nach Abschluss des fünften Verfahrensabschnitts liegen damit mehrere Messwertpaare *MWP* für mehrere Heizabschnitte Δ*T_{HA}* vor, die zumindest jeweils eine Heizleistungsreserve *r_{HA}* und eine zugehörige Außentemperatur ϑ*_{A}* in dem jeweiligen Heizabschnitt Δ*T_{HA}* umfassen.

In einem sechsten Verfahrensschritt S6 wird die Norm-Heizleistungsreserve ${r}_{LS}^{N}$ für das Gebäude 3 bei einer parametrierbaren Normaußentemperatur ${ϑ}_{A}^{N}$, auf die die Gebäudeheizungsanlage im Auslegungspunkt bezogen ist, aus den Heizleistungsreserven *r_{HA}* für die mehreren Heizabschnitte Δ*T_{HA}* in dem Betrachtungszeitraum Δ*T_{B}* bestimmt. Erfindungsgemäß sind hier verschiedene Möglichkeiten vorgesehen, die vorstehend bereits ausführlich beschrieben wurden. Grundsätzlich werden die für verschiedene Außentemperaturen ϑ*_{A}* ermittelte Heizleistungsreserve *r_{HA}* inter- oder extrapoliert. Dies kann besonders einfach durch Anpassung einer Regressionskurve, wie beschrieben, an die zuvor erfassten Messwertpaare *MWP* erfolgen.

In einem siebten Verfahrensschritt S7 wird die Norm-Heizleistungsverserve ${r}_{LS}^{N}$ durch Vergleich mit einem parametrierbaren Heizleistungsreserve-Grenzwert *r_{G}* bewertet. Hierdurch wird die Niedertemperaturfähigkeit der Gebäudeheizungsanlage 2 festgestellt.

Im Betrachtungszeitraum wird die tatsächlich benötigte Heizleistung *Q̇ₘₐₓ, bᵥ* der im Gebäude installierten Heizkörper 6 ermittelt. Die tatsächlich benötigte Heizleistung ist die größte Heizleistung (also die höchste Wärmemengenabgabe pro Zeit), die während des Betrachtungszeitraum benötigt wird. Dies ist typischerweise die an den kältesten Tagen bzw. in den kältesten Heizabschnitten benötigte Wärmemenge, um das Gebäude auf die gewünschte Temperatur zu heizen.

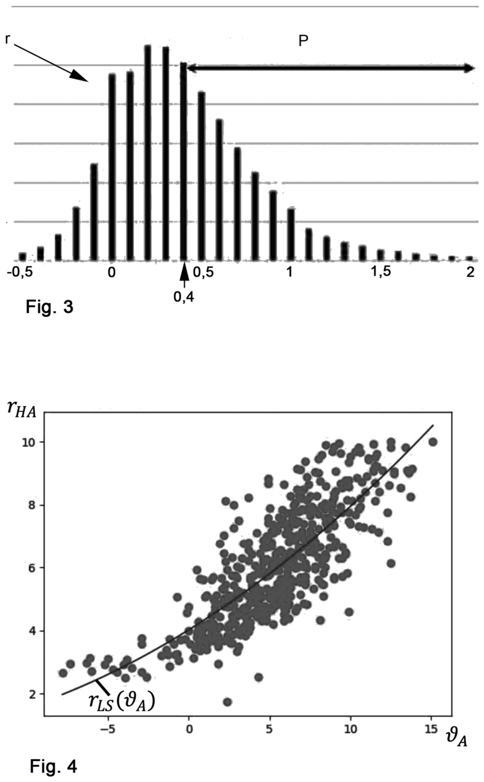

Für einen typischen Gebäudebestand aus einer Heizkostenverteilung mit fossil betriebenen Gebäudeheizungsanlagen 2 in einem definierten Auslegungspunkt ist in Fig. 3 eine Verteilung der Heizleistungsreserve *r* dargestellt, die zwischen Werten von *r* = -0,5 (Unterversorgung) bis zu *r* = 2 (Überversorgung) liegen. Für den diesem Beispiel zugrundeliegenden Auslegungspunkt der Gebäudeheizungsanlage 2 wurde ein Heizleistungsreserve-Grenzwert von *r_{G} =* 0,4 ermittelt. Dies bedeutet, dass alle Gebäude 3, in denen eine Heizleistungsreserve *r_{G}* ≥ 0,4 ermittelt wird, für einen Betrieb mit einer Luft-Wärmepumpe oder mit einem Niedertemperaturheizsystem anstelle einer fossil betriebenen Gebäudeheizungsanlage 2 geeignet sind. Dieser Bereich in der Grafik ist durch den Pfeil P gekennzeichnet.

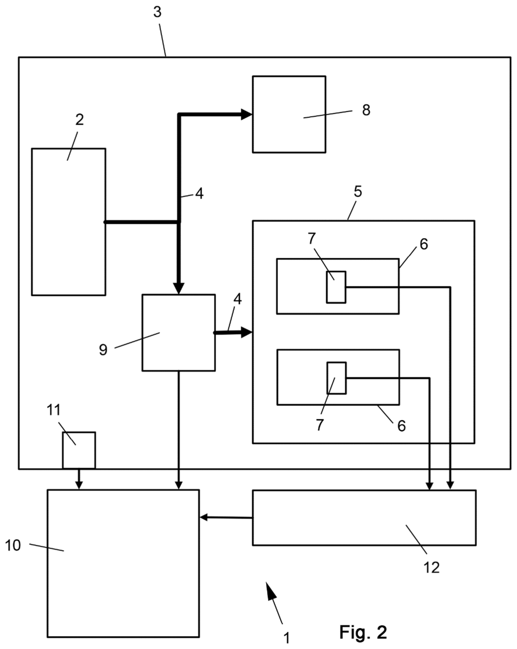

Fig. 2 zeigt eine beispielhafte Vorrichtung 1, die zur Durchführung des vorbeschriebenen Verfahrens geeignet und eingerichtet ist und die Heizleistungsreserve *r* gemäß Fig. 3 für eine Gebäudeheizungsanlage 2 in einem Gebäude 3 bestimmt, um daraus die Niedertemperaturfähigkeit der Gebäudeheizungsanlage 2 zu ermitteln.

Ein in einem Rohrkreislauf 4 fließender und durch die Gebäudeheizungsanlage 2 erwärmter Wärmeträger fließt durch einen Heizkreis 5 mit Heizkörpern 6 (Raumheizkörper), an denen zur Erfassung der Wärmemengenabgabe Heizkostenverteiler 7 angebracht sind. Der Wärmeträger fließt in dem Rohrkreislauf 4 auch durch eine Trinkwarmwasserversorgung 8, in der Warmwasser zum Verbrauch bereitgestellt wird.

Während eines Betrachtungszeitraum Δ*T_{B}* wird für jeden Heizabschnitt Δ*T_{HA}* die durch die Gebäudeheizungsanlage 2 in den Heizkreis 5 abgegebene Wärmeleistung *Q̇_{LS}* ermittelt. Die an den Heizkörpern 6 angebrachten Heizkostenverteiler 7 sind Teil eines Heizkosten-Abrechnungssystems 12, an das die Heizkostenverteiler 7 die in einem Messzeitraum abgegebene Wärmemenge in Form von Temperaturwerten oder Zählerwerten übermitteln. Das Heizkosten-Abrechnungssystems 12 überträgt diese Daten an eine Recheneinheit 10, die die aktuelle Heizkörperleistung *Q̇_{HK}* der im Gebäude 3 installierten Heizkörper 6 und daraus die aktuelle Heizleistung *Q̇_{LS}* ermittelt, wie bereits ausführlich beschrieben.

Das Heizkosten-Abrechnungssystem 12 (zusammen mit den Heizkostenverteilern 7) dient also als Einrichtung zum Ermitteln einer aktuellen Heizleistung *Q̇_{LS}* der im Gebäude 3 installierten Heizkörper 6. Andere Möglichkeiten hierfür wurden beschrieben und können als alternative Einrichtung verwendet werden.

Im Rahmen der Heizkostenverteilung sind auch die (nominalen) Heizkörperleistungen (im Auslegungspunkt der Gebäudeheizungsanlage 2) der im Gebäude 2 installierten Heizkörper 6 bekannt. Diese werden von dem Heizkosten-Abrechnungssystem 12 an die Recheneinheit 10 übertragen, die daraus die Gesamt-Heizkörperleistung *Q̇ᵢₙₛ* von im Gebäude 2 installierten Heizkörpern 6 ermittelt. Das Heizkosten-Abrechnungssystem 12 dient also auch als Einrichtung zum Ermitteln der Gesamt-Heizkörperleistung *Q̇ᵢₙₛ* von im Gebäude 2 installierten Heizkörpern 6. Andere Möglichkeiten hierfür wurden beschrieben und können als alternative Einrichtung verwendet werden.

Optional kann in dem Gebäude 3 ein Wärmemengenzähler 9 vorgesehen sein, der mit einer Recheneinheit 10 verbunden ist, die dazu eingerichtet ist, aus den Messwerten des Wärmemengenzählers 9 die abgegebene Raumheizwärme *Q_{H}* zu ermitteln. Der Wärmemengenzähler 9 kann entsprechend als Einrichtung zum Erfassen der abgegebenen Raumheizwärme *Q_{H}* dienen, in Abgrenzung zu einer von der Gebäudeheizungsanlage 2 abgegebenen Wärmemenge zur Trinkwarmwasserversorgung 8. Für das hier beschriebene Verfahren ist dies jedoch nicht unbedingt notwendig.

In dem Gebäude 3 ist ferner ein Außentemperatursensor 11 zur Messung der Außentemperatur ϑ*_{A}* am Gebäude vorgesehen und mit der Recheneinheit 10 verbunden, die aus den Messwerten des Außentemperatursensors 11 die Außentemperatur ϑ*_{A}* während des Heizabschnitts Δ*T_{HA}* ableitet, ggf. als über den Heizabschnitts Δ*T_{HA}* gemittelte Messwerte . Der Außentemperatursensor 11 dient als Einrichtung zur Erfassung der Außentemperatur ϑ*_{A}* an dem Gebäude (3). Andere Möglichkeiten hierfür wurden beschrieben und können als alternative Einrichtung verwendet werden.

Die Recheneinheit 10 ist, unter Verwendung der vorbeschrieben Daten, dazu eingerichtet, das erfindungsgemäß vorgeschlagene Verfahren durchzuführen, bspw. in der gemäß Fig. 1 beschriebenen Ausführungsform, eine Heizleistungsverserve *r* zu bestimmen und aus einer Bewertung der Heizleistungsreserve *r* die Wärmepumpeneignung des Gebäudes 3 abzuleiten, wie bereits ausführlich beschrieben.

Fig. 4 stellt Messwertpaare *MWP* aus der Außentemperatur ϑ*_{A}* und der Heizleistungsreserve *r_{HA}* für mehrere Heizabschnitte Δ*T_{HA}* eines Betrachtungszeitraums Δ*T_{B}* in einem Graphen dar. Erwartungsgemäß ist die Heizleistungsreserve *r_{HA}* bei höheren Außentemperaturen ϑ*_{A}* größer als bei niedrigeren Außentemperaturen *ϑ_{A}*, weil bei höheren Außentemperaturen ϑ*_{A}* eine kleinere aktuelle Heizleistung *Q̇_{LS}* der im Gebäude 3 installierten Heizkörper 6 benötigt wird, um das Gebäude auf eine gewünschte Raumtemperatur zu erwärmen.

Der Außentemperaturbereich für das Gebäude 3, in dem die Messwerte erhoben wurden, reicht in dem Betrachtungszeitraum Δ*T_{B}* von einer Außentemperatur von etwa ϑ*_{A}* = -8°*C* bis zu einer Außentemperatur von etwa ϑ*_{A}* = +15°*C*.

Die Normaußentemperatur für die Region, in der das Gebäude 3 steht, liegt bei ${ϑ}_{A}^{N} = - 12 ° C … - 15 ° C$. Daher kann die Heizleistungsreserve für die Normaußentemperatur ${ϑ}_{A}^{N}$ nicht unmittelbar aus dem Graphen abgelesen werden. Erfindungsgemäß erfolgt gemäß einer bevorzugten Ausführungsform daher eine Anpassung einer Regressionskurve *r_{LS}*(*ϑ_{A}*) an die Messwertpaare *MWP,* die in Fig. 4 mit eingezeichnet ist. Mit dieser Regressionskurve *r_{LS}*(*ϑ_{A}*) kann die Heizleistungsreserve *r* für den Temperaturwert ${ϑ}_{A}^{N} = - 12 ° C … - 15 ° C$ einfach durch Berechnung ermittelt werden. Bei der in Fig. 4 dargestellten Regressionskurve *r_{LS}*(*ϑ_{A}*) wurden alle Messwertpaare *MWP* für das Anpassen der Regressionskurve berücksichtigt.

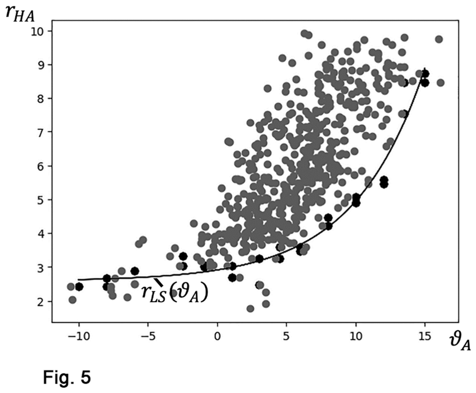

Fig. 5 stellt eine andere Ausführungsform der Erfindung dar, in der anstelle aller Messwertpaare *MWP* für das Anpassen der Regressionskurve *r_{LS}*(*ϑ_{A}*) nur die Messwertpaare verwendet wurden, die die unteren Einhüllenden der Messwertpaare bilden. Dies sind die Messwertpaare, bei denen die Heizleistungsreserve *r_{LS}* bei gegebener Außentemperatur ϑ*_{A}* am niedrigsten und der Heizbedarf am höchsten war. Diese Messungen sind bei der Beurteilung der Niedertemperaturfähigkeit der Heizungsanlage vorrangig zu betrachten, wenn auch im Niedertemperaturbetrieb keine Komforteinbußen hingenommen werden sollen. Die in der Regressionskurve *r_{LS}*(*ϑ_{A}*) berücksichtigten Messwertpaare *MWP* sind in Fig. 5 dunkler dargestellt als die nicht berücksichtigten Messwertpaare. In der Darstellung unterhalb der dunkler dargestellten Messwertpaare liegende Messwertpaare wurden als Ausreißer qualifiziert und das beim Anpassen der Regressionskurve *r_{LS}*(*ϑ_{A}*) nicht berücksichtigt. Das Ausschließen solcher Messwertpaare kann durch bekannte optische und/oder statistische Verfahren durch den Fachmann erfolgen. Dies ist bekannt und wird daher in der technischen Umsetzung hier nicht näher beschrieben.

Es hat sich im Zuge der Erfindung herausgestellt, dass solche Ausreißer in den Messwertpaaren häufig dennoch mit technischen Ursachen erklärt werden können. Beispielsweise können solche "Ausreißer nach unten" so zu erklären sein, dass bei niedrigen Außentemperaturen über einen längeren Zeitraum gegen ein offenes Fenster angeheizt wurde. Solche oder ähnliche Situationen bedeuten aber keine Komforteinbußen und sollen bei der Beurteilung einer Niedertemperaturfähig eine Gebäudeheizungsanlage gemäß dieser Ausführungsform vorzugsweise außer Acht bleiben.

Ein besonderer Vorteil der Erfindung liegt darin, dass die Niedertemperaturfähigkeit respektive Wärmepumpeneignung eines Gebäudes 3 aus den Daten der Heizkostenverteilung und Heizkostenabrechnung ohne oder ohne großen gerätetechnischen Aufwand für eine Vielzahl von Gebäuden 3 direkt ableitbar ist und - insbesondere bei unmittelbar geeigneten Gebäuden - einen Anstoß zur Umrüstung auf eine Wärmepumpen betriebene Gebäudeheizung geben kann.

### Bezugszeichenliste

- 1: Vorrichtung
- 2: Gebäudeheizungsanlage
- 3: Gebäude
- 4: Rohrkreislauf
- 5: Heizkreis
- 6: Heizkörper
- 7: Heizkostenverteiler als Raumheizwärme-Messgeräte
- 8: Trinkwarmwasserversorgung
- 9: Wärmemengenzähler als Einrichtung zum Erfassen der abgegebenen Raumheizwärme
- 10: Recheneinheit
- 11: Außentemperatursensor als Einrichtung zum Ermitteln einer Außentemperatur
- 12: Heizkosten-Abrechnungssystem als Einrichtung zum Ermitteln einer tatsächlich benötigten Heizleistung der im Gebäude installierten Heizkörper

- S1 bis S6: Verfahrensschritte
- P: Bereich "Luft-Wärmepumpeneignung / Niedertemperaturfähigkeit"

## Patentansprüche

1. Verfahren zur Ermittlung der Niedertemperaturfähigkeit einer Gebäudeheizungsanlage (2) eines Gebäudes (3) umfassend die folgenden Verfahrensschritte:
Ermitteln der Gesamt-Heizkörperleistung (*Q̇ᵢₙₛ, bᵢₙₛ*) von im Gebäude (3) installierten Heizkörpern (6) in einem Auslegungspunkt (A) der Gebäudeheizungsanlage (2);
Ermitteln einer Außentemperatur (ϑ*_{A}*) in einem Heizabschnitt (Δ*T_{HA}*) an dem Gebäude (3);
Ermitteln einer aktuellen Heizleistung (*Q̇_{LS}, b_{LS}*) der im Gebäude (3) installierten Heizkörper (6) in dem Heizabschnitt (Δ*T_{HA}*);
Bestimmen einer Heizleistungsreserve (*r_{HA}*) für den Heizabschnitt (Δ*T_{HA}*) aus einem Vergleich der aktuellen Heizleistung (*Q̇_{LS}, b_{LS}*) in dem Heizabschnitt (Δ*T_{HA}*) und der Gesamt-Heizkörperleistung (*Q̇ᵢₙₛ, bᵢₙₛ*);
Bestimmen der Heizleistungsreserve (*r_{HA}*) für mehrere Heizabschnitte (Δ*T_{HA}*) eines Betrachtungszeitraums (Δ*T_{B}*);
Bestimmen einer Norm-Heizleistungsreserve ( ${r}_{LS}^{N}$) für das Gebäude (3) bei einer Normaußentemperatur ( ${ϑ}_{A}^{N}$) aus den Heizleistungsreserven (*r_{HA}*) für die mehreren Heizabschnitte (Δ*T_{HA}*) in dem Betrachtungszeitraum (Δ*T_{B}*);
Bewerten der Norm-Heizleistungsreserve ( ${r}_{LS}^{N}$) mit einem Heizleistungsreserve-Grenzwert (*r_{G}*).

2. Verfahren nach Anspruch 1, **dadurch gekennzeichnet, dass** die aktuelle Heizleistung (*Q̇_{LS}, b_{LS}*) des Gebäudes (3) aus aktuellen Heizkörperleistungen (*Q̇_{HK,i}*) der im Gebäude (3) installierten Heizkörper (6) mittels von Heizkostenverteilern erfassten Werten ermittelt wird.

3. Verfahren nach Anspruch 2, **dadurch gekennzeichnet, dass** die von Heizkostenverteilern erfassten Werte Temperaturwerte (ϑ*_{V},* ϑ*_{R},* ϑ*_{L}*), Zählerwerte (Δ*Z_{HK}*) und/oder andere den Wärmebrauch der Heizkörper anzeigende Werte (Δ*_{EHKV},* Δ*_{log}, b_{HK}*) sind.

4. Verfahren nach einem der vorhergehenden Ansprüche, **dadurch gekennzeichnet, dass** die Heizleistungsreserve (*r_{HA}*) in dem Heizabschnitt (Δ*T_{HA}*) auf einem Quotienten von Gesamt-Heizkörperleistung (*Q̇ᵢₙₛ, bᵢₙₛ*) und aktueller Heizleistung (*Q̇_{LS}, b_{LS}*) basiert.

5. Verfahren nach einem der vorhergehenden Ansprüche, **dadurch gekennzeichnet, dass** aus Messwertpaaren (MWP) für die mehreren Heizabschnitte (Δ*T_{HA}*), jeweils gebildet aus der Heizleistungsreserve (*r_{HA}*) und der Außentemperatur (ϑ*_{A}*) für den jeweiligen Heizabschnitt (Δ*T_{HA}*), eine Regressionskurve (*r_{LS}*(ϑ*_{A}*), *r̂_{LS}*(*ϑ_{A}*)) für die Abhängigkeit der Heizleistungsreserve (*r_{HA}*) von der Außentemperatur (ϑ*_{A}*) gebildet wird.

6. Verfahren nach Anspruch 5, **dadurch gekennzeichnet, dass** die Regressionskurve (*r_{LS}*(*ϑ_{A}*)) entsprechend der Formel ${r}_{LS} \left({ϑ}_{A}\right) = {a}_{0} + {a}_{1} ⋅ {ϑ}_{A} + {a}_{2} ⋅ {ϑ}_{A}^{2}$ gebildet wird, wobei *a*₀, *a*₁, *a*₂ Fitparameter aus einer numerischen Anpassung der Regressionskurve (*r_{LS}*(*ϑ_{A}*)) an die Messwertpaaren (MWP) sind, oder dass die Regressionskurve (*r̂_{LS}*(*ϑ_{A}*)) entsprechend der Formel ${\hat{r}}_{LS} \left({ϑ}_{A}\right) = a ⋅ {e}^{\left(b⋅{ϑ}_{A}\right)} + c ,$ gebildet wird, wobei *a, b, c* Fitparameter aus einer numerischen Anpassung der Regressionskurve (*r̂_{LS}*(*ϑ_{A}*)) an die Messwertpaaren (MWP) sind.

7. Verfahren nach Anspruch 5, **dadurch gekennzeichnet, dass** die Messwertpaare (MWP) für verschiedene Gebäude (3) bestimmt werden und die aktuelle Heizleistung (*Q̇_{LS}*) eines jeweiligen Gebäudes (3) auf die Wohlfläche (*A_{LS}*) bezogen und als spezifische Heizleistung (*q̇_{LS}*) bestimmt werden und dass die Regressionskurve (*s_{LS}*(*q̇_{LS}, ϑ_{A}*), *ŝ_{LS}*(*q̇_{LS}, ϑ_{A}*)) für die Abhängigkeit der Heizleistungsleistungsreserve (*r_{HA}*) von der spezifische Heizleistung (*q̇_{LS}*) und der Außentemperatur (ϑ*_{A}*) gebildet wird.

8. Verfahren nach Anspruch 7, **dadurch gekennzeichnet, dass** die Regressionskurve (*s_{LS}*(*q̇_{LS}, ϑ_{A}*)) entsprechend der Formel ${s}_{LS} \left({\dot{q}}_{LS}, {ϑ}_{A}\right) = {a}_{0} \left({\dot{q}}_{LS}\right) + {a}_{1} \left({\dot{q}}_{LS}\right) ⋅ {ϑ}_{A} + {a}_{2} \left({\dot{q}}_{LS}\right) ⋅ {ϑ}_{A}^{2}$ **gebildet** wird, wobei *a*₀, *a*₁, *a*₂ Fitparameter aus einer numerischen Anpassung der Regressionskurve (*s_{LS}*(*q̇_{LS}, ϑ_{A}*)) an die Messwertpaare (MWP) sind, oder dass die Regressionskurve (*ŝ_{LS}*(*q̇_{LS}, ϑ_{A}*)) entsprechend der Formel ${\hat{s}}_{LS} \left({\dot{q}}_{LS}, {ϑ}_{A}\right) = a \left({\dot{q}}_{LS}\right) ⋅ {e}^{\left(b\left({\dot{q}}_{LS}\right)⋅{ϑ}_{A}\right)} + c \left({\dot{q}}_{LS}\right) ,$ gebildet wird, wobei *a, b, c* Fitparameter aus einer numerischen Anpassung der Regressionskurve (*ŝ_{LS}*(*q̇_{LS}, ϑ_{A}*)) an die Messwertpaare (MWP) sind,
wobei die Fitparameter *a*₀, *a*₁, *a*₂ oder *a, b, c* eine Funktion der spezifischen Heizleistung (*q̇_{LS}*) sind.

9. Vorrichtung zur Bestimmen der Niedertemperaturfähigkeit einer Gebäudeheizungsanlage (2) mit
einer Einrichtung (12) zum Ermitteln einer Gesamt-Heizkörperleistung (*Q̇ᵢₙₛ, bᵢₙₛ*) von im Gebäude (3) installierten Heizkörpern (6);
einer Einrichtung (12) zum Ermitteln einer Außentemperatur (ϑ*_{A}*) an dem Gebäude (3);
einer Einrichtung (11) zum Ermitteln einer aktuellen Heizleistung (*Q̇_{LS}, b_{LS}*) der im Gebäude (3) installierten Heizkörper (6); und
mit einer Recheneinheit (10);
**dadurch gekennzeichnet, dass** die Recheneinheit (10) zur Durchführung des Verfahrens nach einem der Ansprüche 1 bis 8 eingerichtet ist.

10. Vorrichtung nach Anspruch 9, **dadurch gekennzeichnet, dass** die Einrichtung (12) zum Ermitteln der Gesamt-Heizkörperleistung (*Q̇ᵢₙₛ, bᵢₙₛ*) von im Gebäude (3) installierten Heizkörpern (6) und zum Ermitteln der aktuellen Heizleistung (*Q̇_{LS}, b_{LS}*) ein Heizkosten-Abrechnungssystem ist.

11. Vorrichtung nach Anspruch 10, **dadurch gekennzeichnet, dass** die Einrichtung (12) Heizkostenverteiler (7) an mindestens einem Heizkörper (6) der Gebäudeheizungsanlage (2) aufweist.

12. Vorrichtung nach einem der Ansprüche 9 bis 11, **dadurch gekennzeichnet, dass** die Einrichtung (11) zum Ermitteln einer Außentemperatur (ϑ*_{A}*) an dem Gebäude (3) einen Außentemperatursensor aufweist.
